# EUROPEAN PATENT SPECIFICATION

(11) **EP 2 078 640 B1**
(45) Date of publication and mention of the grant of the patent: **30.03.2011**
(21) Application number: 08021397.8
(22) Date of filing: 09.12.2008
(51) Int. Cl.: B60R 16/027, H01R 35/00, H01R 35/02

(54) **Rotary connector**
Rotationsverbinder
Connecteur rotatif

(30) Priority: 08.01.2008 JP 2008001324
(43) Date of publication of application: 15.07.2009
(73) Proprietor: Alps Electric Co., Ltd., Tokyo 145-8501 (JP)
(72) Inventor: Asakura, Toshiaki, Ota-ku Tokyo 145-8501 (JP); Bannai, Hiroyuki, Ota-ku Tokyo 145-8501 (JP); Kuroda, Nagao, Ota-ku Tokyo 145-8501 (JP)
(74) Representative: Klunker . Schmitt-Nilson . Hirsch

(56) References cited:
- EP-A- 0 820 125
- EP-A- 1 063 132
- EP-A- 1 878 619
- US-A1- 2003 129 867

## Description

### Cross Reference to Related Application

The present invention contains subject matter related to Japanese Patent Application No. 2008-001324 filed in the Japanese Patent Office on January 08, 2008, the entire contents of which being incorporated herein by reference.

### BACKGROUND

### 1. Technical Field

The present invention relates to a rotary connector that is assembled into a steering device of an automobile and used as electrical connection means of an airbag system or the like, and more particularly, to a rotary connector where three or more flat cables are reversely wound through reversed portions in an annular space formed between a stator and a rotor.

### 2. Related Art

In a rotary connector, a rotor including an inner cylindrical part is rotatably supported by a stator including an outer cylindrical part, and flat cables are received and wound in an annular space formed between the outer and inner cylindrical parts. The rotary connector has been used as electrical connection means of an airbag inflator or the like that is mounted in a steering wheel of which the number of revolutions is limited like a steering device of an automobile. The flat cable is a band-shaped body where conductors are supported on an insulating film. There has been known a spiral type rotary connector where a flat cable is spirally wound and a reverse type rotary connector where a flat cable is reversely wound on the way, but the reverse type rotary connector has been mainly used since the length of the flat cable can be significantly reduced. One flat cable has been generally used in the reverse type rotary connector. However, in the past, there has been proposed a rotary connector that is formed to cope with multiple circuits by spreading conductors on two or more flat cables (for example, refer to U.S. Patent No. 6, 302, 716 which corresponds to JA-P-10-116672).

Fig. 5 is a plan view of a rotary connector, which is disclosed in U.S.Patent No.6,302,716, in the related art. The rotary connector includes a stator 100 that includes an outer cylindrical part 100a, a rotor 101 that includes an inner cylindrical part 101a rotatably supported at the central position of the stator 100, a ring-shaped holder 103 that is rotatably disposed in an annular space 102 formed by the outer and inner cylindrical parts 100a and 101a, and first and second flat cables 104 and 105 that are received in the annular space 102 while being reversely wound on the way. A pair of stationary cylinders 106 is erected on the holder 103, and a plurality of rollers 107 is rotatably supported by the holder. Each of the stationary cylinders 106 faces one of a group of the rollers 107 with a predetermined width therebetween in a circumferential direction. Assuming that a gap formed between one stationary cylinder 106 and a roller 107 facing this stationary cylinder is referred to as a first opening 108 and a gap formed between the other stationary cylinder 106 and a roller 107 facing this stationary cylinder is referred to as a second opening 109, the width of the first opening 108 in the circumferential direction is set to be smaller then the width of the second opening 109 in the circumferential direction.

Each of the first and second flat cables 104 and 105 is a band-shaped body where a plurality of conductors is supported on an insulating film made of PET (polyethylene terephthalate). For convenience sake, the first flat cable 104 is shown by a black color and the second flat cable 105 is shown by a void. Outer ends of both flat cables 104 and 105 are connected to a stationary side joint 110 that is provided at the outer cylindrical part 100a, and electrically led out to the outside of the stator 100 through the stationary side joint 110. Further, inner ends of both flat cables 104 and 105 are connected to a movable side joint 111 that is provided at the inner cylindrical part 101a, and electrically led out to the outside of the rotor 101 through the movable side joint 111. In this case, while the first flat cable 104 is provided on an inner side (on a lower side), the flat cables 104 and 105 are led from the movable side joint 111 and wound on an outer peripheral wall of the inner cylindrical part 101a in a counterclockwise direction. Then, the first flat cable 104 is branched off from the flat cables, passes through the narrow first opening 108, and is reversed in a U shape on another roller 107 of the group of the rollers 107 (hereinafter, referred to as a reversed portion 104a). The second flat cable 105 passes through the wide second opening 109, and is reversed in a U shape on another roller 107 of the group of the rollers 107 (hereinafter, referred to as a reversed portion 105a) . In addition, while the second flat cable 105 is provided on an outer side, the flat cables are wound in a clockwise direction along the inner peripheral wall of the outer cylindrical part 100a and are then received in the annular space 102 so as to reach the stationary side joint 110.

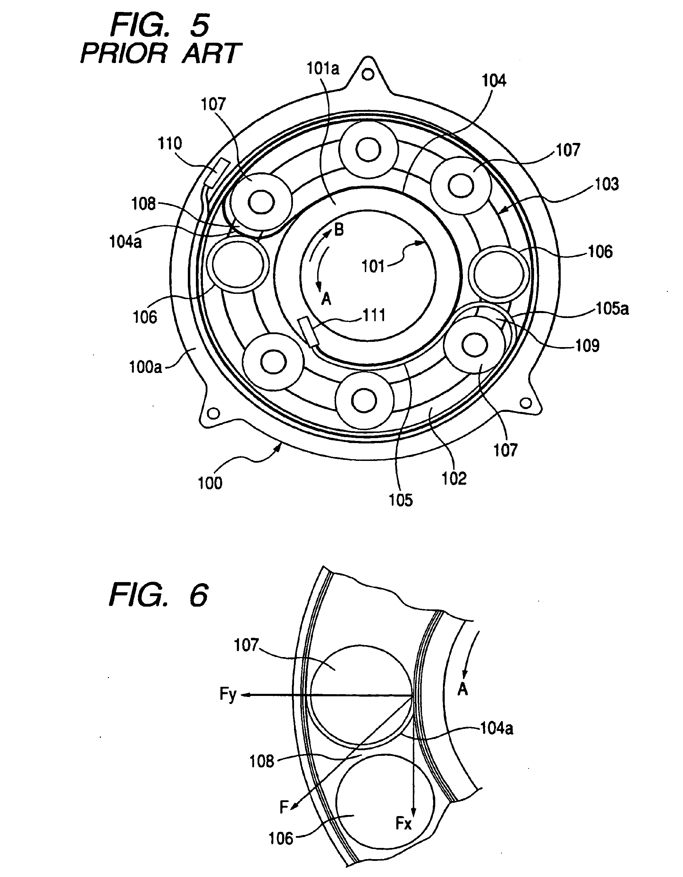

As for the rotary connector having the above-mentioned schematic structure, if the rotor 101 is rotated from a neutral position in a counterclockwise direction (a direction indicated by an arrow A of Fig. 5), the reversed portions 104a and 105a of the first and second flat cables 104 and 105 are moved in the direction indicated by the arrow A by a distance smaller than the moving distance of the rotor 101. The holder 103 is also moved in the direction, which is indicated by the arrow A, so as to follow the reversed portions 104a and 105a. As a result, the flat cables 104 and 105, which correspond to the length about two times as large as the moving distances of the reversed portions, are fed from the outer peripheral wall of the inner cylindrical part 101a and rewound toward the inner peripheral wall of the outer cylindrical part 100a. In this case, the reversed portion 105a of the second flat cable 105 having a large winding diameter is moved slightly faster than the reversed portion 104a of the first flat cable 104 having a small winding diameter, but the first opening 108 is set to be narrower than the second opening 109 as described above. Accordingly, the reversed portions 104a and 105a push the stationary cylinders 106 facing the openings 108 and 108, respectively, and the holder 103 receives pushing forces from the reversed portions 104a and 105a and is rotated in the annular space 102 in the direction indicated by the arrow A.

In contrast, if the rotor 101 is rotated from the neutral position in a counterclockwise direction (a direction indicated by an arrow B of Fig. 5), the reversed portions 104a and 105a of the flat cables 104 and 105 are moved in the direction indicated by the arrow B by a distance smaller than the moving distance of the rotor 101. The holder 103 is also moved in the direction, which is indicated by the arrow B, so as to follow the reversed portions 104a and 105a. As a result, the flat cables 104 and 105, which correspond to the length about two times as large as the moving distances of the reversed portions, are fed from the inner peripheral wall of the outer cylindrical part 100a and tightly wound toward the outer peripheral wall of the inner cylindrical part 101a. Even in this case, the reversed portion 105a of the second flat cable 105 having a large winding diameter is moved slightly faster than the reversed portion 104a of the first flat cable 104 having a small winding diameter, but the first opening 108 is set to be narrower than the second opening 109. Accordingly, the reversed portions 104a and 105a push the rollers 107 facing the openings 108 and 108, respectively, and the holder 103. receives pulling forces from the reversed portions 104a and 105a and is rotated in the annular space 102 in the direction indicated by the arrow B.

As for the above-mentioned rotary connector in the related art, when the rotor 101 is rotated in the direction indicated by the arrow A and rewinds the flat cables 104 and 105 toward the inner peripheral wall of the outer cylindrical part 100a, a feeding force in the direction indicated by an arrow F of Fig. 6 is generated at a contact portion between the first flat cable 104 passing through the first opening 108 and the roller 107. Among components of the feeding force F in directions that are indicated by arrows Fx and Fy, the component in the direction indicated by the arrow Fx acts as a pushing force for rotationally driving the holder 103, and the component in the direction indicated by the arrow Fy acts as a loosely winding force that pushes the reversed portion 104a of the first flat cable 104 toward the outer cylindrical part 100a. Although the detailed description is omitted, the second flat cable 105 passing through the second opening 109 is the same as described above. Further, when the flat cable is generally rewound, the component in the direction indicated by the arrow Fx exceeds the component in the direction indicated by the arrow Fy. Accordingly, when passing through the first opening 108, the reversed portion 104a of the first flat cable 104 pushes the stationary cylinder 106 in a rotational direction (the direction indicated by the arrow A). Likewise, when passing through the second opening 109, the reversed portion 105a of the second flat cable 105 pushes the stationary cylinder 106 in the rotational direction. Further, the holder 103 receives the pushing forces from the reversed portions 104a and 105a and is smoothly rotated in the direction indicated by the arrow A.

However, as for the rotary connector in the related art, when three or more flat cables are reversed at three or more openings and the rotor is rotated in the counterclockwise direction, it is difficult to set the width of each of the openings so that the reversed portions of the flat cables push the stationary cylinders facing the openings, respectively. When the rotor is rotated in the clockwise direction, it is also difficult to set the width of each of the openings so that the reversed portions of the flat cables push the rollers facing the openings, respectively. Further, since driving forces applied to the holder from the reversed portions of the flat cables interfere with each other depending on some set values of the width of each of the openings, it is difficult to smoothly tightly wind / rewind the cable.

Furthermore, it may be considered that the width of each of the openings is set so that the holder is driven only by the reversed portion of the flat cable passing through the narrow opening. However, considerable stress is applied to the reversed portion of the flat cable passing through the narrow opening in this case, so that the movement of the reversed portion of the flat cable in the direction indicated by the arrow A is obstructed in the narrow opening. For this reason, it is not possible to smoothly drive the holder. Therefore, the reversed portion of the flat cable, which is positioned in the narrow opening and is not moved in the rotational direction, may be forcedly inserted into a space communicating with the opening. As a result, there are problems in that the flat cable passing through the narrow opening is intricately bent and buckled or the conductors supported on the insulating film of the flat cable are broken. In particular, if environmental temperature rises, these problems occur with increased frequency.

A rotary connector showing the features of the pre-amble of claim 1 is know from us 2003 0129867A1.

### SUMMARY

An advantage of some aspects of the invention is to provide a rotary connector that can smoothly tightly wind / rewind cables even though three or more flat cables are used.

According to an aspect of the invention, a rotary connector includes a stator that includes an outer cylindrical part, a rotor that includes an inner cylindrical part and is rotatably supported by the stator, three or more flat cables that are received in an annular space formed between the outer and inner cylindrical parts while being reversely wound on the way, and a holder that is rotatably disposed in the annular space and includes three or more openings through which reversed portions of the flat cables individually pass. Both ends of the flat cables are connected to the stator and the rotor, respectively. The width of one opening in a circumferential direction is set to be smaller than that of each of the other openings in the circumferential direction. The holder is driven by a pushing force from the flat cable that passes through the narrow opening. The bending strength of the driving side flat cable is set to be higher than that of each of the other flat cables. At least two or more flat cables including the driving side flat cable are led from a common cable lead-out portion of the inner cylindrical part toward the annular space. The driving side flat cable of the flat cables is wound on the lowest portion of the outer peripheral surface of the inner cylindrical part.

One flat cable passing through the narrow opening has been a driving side flat cable, which applies a force (a pushing force and a winding force) to the holder in the rotational direction, in the rotary connector having the above-mentioned structure. However, the other flat cables passing through the wide openings are driven side flat cables that are not involved in the drive of the holder, and the bending strength of the driving side flat cable is set to be higher than that of each of the other flat cables. Accordingly, it is possible to smoothly rotate the holder by preventing the buckling of the driving side flat cable. Further, the driving side flat cable is led from the cable lead-out portion and wound on the lowest portion of the outer peripheral surface of the inner cylindrical part, and the driven side flat cables are wound thereon. Accordingly, the curvature of the reversed portion of the driving side flat cable is increased as compared to the curvature of the reversed portion of the driven side flat cable, so that it is possible to reduce the bending stress of the reversed portion of the driving side flat cable by that much. For this reason, it is possible to lengthen the life of the driving side flat cable. That is, since the flat cables wound on the lowest portion of the outer peripheral surface of the inner cylindrical part is provided between the reversed portion of the flat cable and the outer peripheral surface of the inner cylindrical part and between the reversed portion of the flat cable and the inner peripheral surface of the outer cylindrical part, a space between the reversed portion and the outer peripheral surface of the inner cylindrical part and a space between the reversed portion and the inner peripheral surface of the outer cylindrical part are decreased by the thickness of each flat cable provided therebetween. Therefore, the curvature of the reversed portion of the flat cable wound on the upper side of the flat cable wound on the lowest portion of the outer peripheral surface of the inner cylindrical part is smaller than the curvature of the reversed portion of the flat cable wound on the lowest portion of the outer peripheral surface of the inner cylindrical part. Accordingly, if the flat cable wound on the upper side of the flat cable wound on the lowest portion of the outer peripheral surface of the inner cylindrical part is used as a driving side flat cable, the flat cable has a small curvature as compared to the curvature of the reversed portion of the flat cable wound on the lowest portion of the outer peripheral surface of the inner cylindrical part, which is used as a driving side flat cable. Therefore, the bending stress applied to the reversed portion of the driving side flat cable is increased, so that the disconnection and breakage of the driving side flat cable easily occur. For this reason, according to the structure of the invention, it is possible to smoothly tightly wind / rewind cables even though three or more flat cables are used, and it is possible to stably use the cable even under a high-temperature use environment and to lengthen the life of the driving side flat cable.

In the above-mentioned structure, all of the three or more flat cables including the driving side flat cable may be led from a common cable lead-out portion of the inner cylindrical part. However, a pair of cable lead-out portions may be provided at two positions that are distant from each other in the circumferential direction of the inner cylindrical part, two or more flat cables including driving and driven side flat cables may be led from one cable lead-out portion, and two or more driven side flat cables may be led from the other cable lead-out portion.

Further, in the above-mentioned structure, as means that makes the bending strength of the driving side flat cable be higher than the bending strength of each of the other flat cables, only the insulating film of the driving side flat cable may be made of a material that hardly occurs buckling as compared to the insulating film of the driven side flat cable. However, if each of the flat cables including the driving and driven side flat cables is formed of a band-shaped body where conductors are supported on an insulating film made of the same material and the thickness of the driving side flat cable is set to be larger than that of each of the other flat cables, it is possible to preferably make the frictional resistance between the flat cables be uniform.

Further, in the above-mentioned structure, if the width of each of the other openings in the circumferential direction is set to be 4.5 times or more as large as the width of the narrow opening in the circumferential direction, driving forces applied to the holder from the reversed portions of the flat cables may not interfere with each other. It is possible to preferably smoothly tightly wind / rewind the cables.

In the rotary connector according to the invention, one flat cable of three or more flat cables to be used, which passes through the narrow opening set to be narrow, is a driving side flat cable that applies a pushing force to the holder in the rotational direction, and each of the other flat cables passing through the wide openings is a driven side flat cable that is not involved in the drive of the holder. Since the bending strength of the driving side flat cable is set to be higher than that of each of the driven side flat cables, it is possible to smoothly drive the holder by preventing the buckling of the driving side flat cable. In addition, the driving side flat cable is led from the cable lead-out portion, and wound on the lowest portion of the outer peripheral surface of the inner cylindrical part, and the driven side flat cables are wound thereon. Since the curvature of the reversed portion of the driving side flat cable is larger than that of the reversed portions of the driven side flat cable, it is possible to reduce the bending stress that is applied to the reversed portion of the driving side flat cable. For this reason, it is possible to smoothly tightly wind / rewind the cables even though three or more cables are used. Further, it is possible to stably use the cable even under a high-temperature use environment and to lengthen the life of the driving side flat cable.

### BRIEF DESCRIPTION OF THE DRAWINGS

Fig. 1 is a cross-sectional view of a rotary connector according to an embodiment of the invention.
Fig. 2 is a plan view showing that a cable of the rotary connector shown in Fig. 1 is tightly wound.
Fig. 3 is a plan view showing that the cable of the rotary connector shown in Fig. 1 is rewound.
Fig. 4 is a view illustrating a dimensional relationship between a driving side flat cable and a driven side flat cable that are included in the rotary connector shown in Fig. 1.
Fig. 5 is a plan view of a rotary connector in the related art.
Fig. 6 is a view illustrating problems of the rotary connector shown in Fig. 5.

### DESCRIPTION OF EXEMPLARY EMBODIMENTS

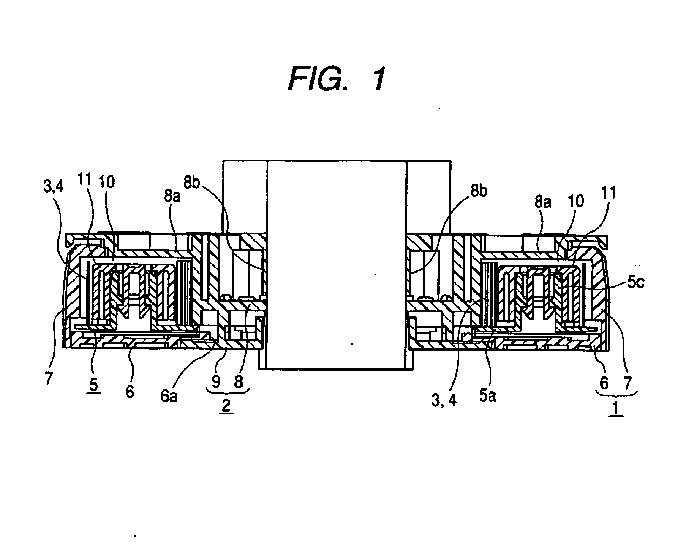

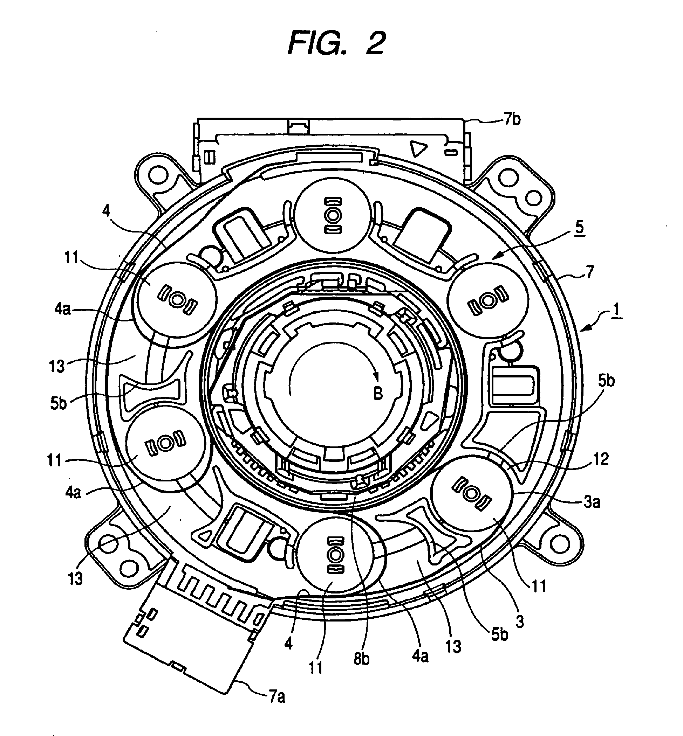

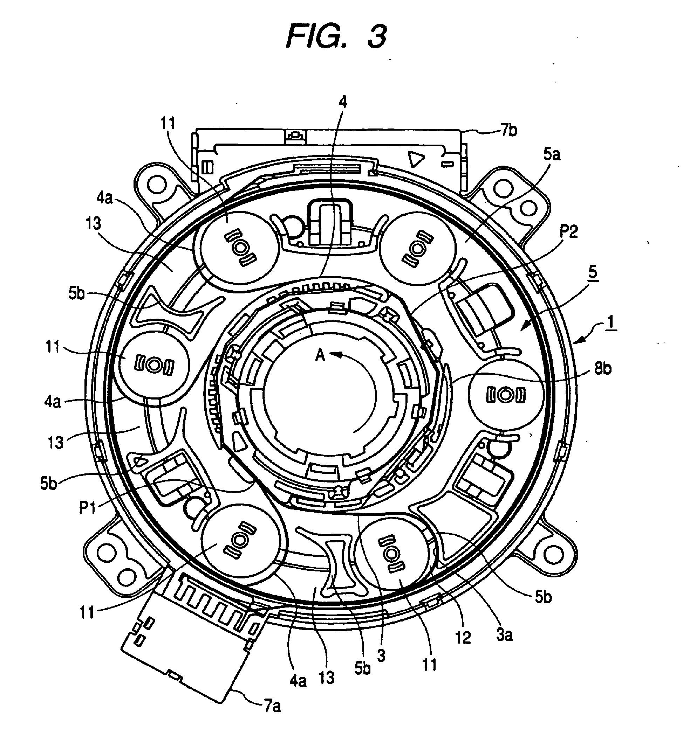

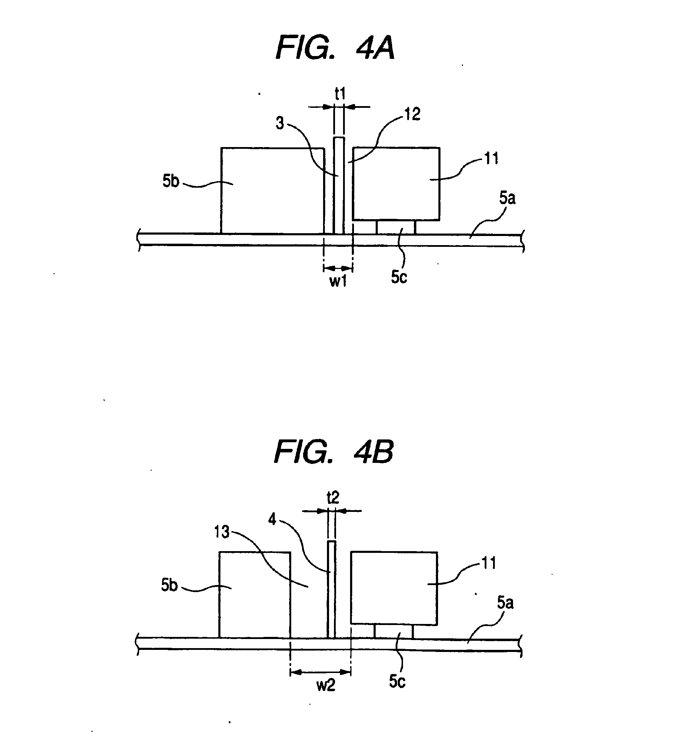

An embodiment of the invention will be described with reference to drawings. Fig. 1 is a cross-sectional view of a rotary connector according to an embodiment of the invention, Fig. 2 is a plan view showing that a cable of the rotary connector shown in Fig. 1 is tightly wound, Fig. 3 is a plan view showing that the cable of the rotary connector shown in Fig. 1 is rewound, and Fig. 4 is a view illustrating a dimensional relationship between a driving side flat cable and a driven side flat cable that are included in the rotary connector shown in Fig. 1. Meanwhile, a top board of a rotor is omitted in Figs. 2 and 3.

The rotary connector according to this embodiment generally includes a stator 1, a rotor 2 that is rotatably connected to the stator 1, one driving side flat cable 3 and three driven side flat cables 4 that electrically connect the stator 1 to the rotor 2, and a holder 5 that is made of a synthetic resin and disposed in the stator 1 and the rotor 2.

The stator 1 is a stationary member that is provided on a steering column. The stator 1 includes a bottom plate 6 that is made of a synthetic resin, and an outer cylindrical body 7 that is an outer cylindrical part. A center hole 6a is formed at the center of the bottom plate 6, and the outer cylindrical body 7 is integrally formed at the outer peripheral edge of the bottom plate 6. Further, a pair of extension parts 7a and 7b, which protrudes outward, is integrated with the outer peripheral surface of the outer cylindrical body 7, and stationary side joints (not shown) are provided in the extension parts 7a and 7b, respectively.

The rotor 2 is a movable member connected to a steering wheel. The rotor 2 includes a rotor snap 9 and a rotor body 8 that are made of a synthetic resin. The rotor body 8 includes an annular top board 8a that faces the bottom plate 6, and an inner cylindrical part 8b that is suspended from the center of the top board 8a. The inner cylindrical part 8b has an inner diameter as large as a steering shaft is inserted into the inner cylindrical part, and a pair of movable side joints (not shown) is provided in the inner cylindrical part 8b. The rotor snap 9 is integrated with the inner cylindrical part 8b of the rotor body 8 by snap-fitting. The rotor snap 9 is inserted into the center hole 6a of the bottom plate 6, so that the rotor 2 is rotatably connected to the stator 1. Further, when the stator 1 and the rotor 2 are connected to each other, an annular space 10 having a ring shape is formed in plan view by the bottom plate 6 and the outer cylindrical body 7 of the stator 1 and the top board 8a and the inner cylindrical part 8b of the rotor body 8.

The driving side flat cable 3 is a band-shaped body where conductors are supported on an insulating film made of PET (polyethylene terephthalate). Likewise, each of the three driven side flat cables 4 is a band-shaped body where conductors are supported on an insulating film made of PET. The flat cables 3 and 4 are received in the annular space 10 in the reverse direction by U-shaped reversed portions 3a and 4a. Meanwhile, the thickness t1 of the driving side flat cable 3 is set to be sufficiently larger than that of the thickness t2 of the driven side flat cable 4 (t1=0.22 mm and t2=0.11 mm in this embodiment). A flat cable having a thickness, which is about twice as large as that of the driven side flat cable 4, is used as the driving side flat cable 3 as described above, so that the bending strength (limit of elasticity) of the driving side flat cable 3 is set to be sufficiently larger than the bending strength of the driven side flat cable 4.

As apparent from Fig. 2, the outer ends of the driving side flat cable 3 and one driven side flat cable 4 are connected to one stationary side joint in the extension part 7a, and the outer ends of the other two driven side flat cables 4 are connected to the other stationary side joint in the extension part 7b. The outer ends of the flat cables 3 and 4 are electrically led out to the outside of the stator 1.

As apparent from Fig. 3, the inner ends of the driving side flat cable 3 and one driven side flat cable 4 are connected to one movable side joint in the inner cylindrical part 8b through a first cable lead-out portion P1, and the inner ends of the other two driven side flat cables 4 are connected to the other movable side joint in the inner cylindrical part 8b through a second cable lead-out portion P2. The inner ends of the flat cables 3 and 4 are electrically led out to the outside of the rotor 2. In this case, the first and second cable lead-out portions P1 and P2 are provided at opposite positions with an angle of about 180° therebetween in a circumferential direction of the inner cylindrical part 8b. The driving side flat cable 3 and one driven side flat cable 4 are led out from the first cable lead-out portion P1 toward the annular space 10, and the other two driven side flat cables 4 are led from the second cable lead-out portion P2 toward the annular space 10. Further, as for a range corresponding to the substantially half of the periphery that reaches the second cable lead-out portion P2 from the first cable lead-out portion P1 serving as an upstream side, the driving side flat cable 3 is wound on the lowest portion of the outer peripheral surface of the inner cylindrical part 8b, and the driven side flat cables 4 are wound thereon..

The holder 5 includes an annular flat part 5a that is placed on the bottom plate 6 of the stator 1, and a plurality of guide walls 5b and support shafts 5c that are erected on the annular flat part 5a. Rollers 11 are rotatably supported by the support shafts 5c, respectively. One of a group of the rollers 11 faces the guide wall 5b with a first opening 12 therebetween, and the reversed portion 3a of the driving side flat cable 3 is positioned in the first opening 12. Further, each of three of the group of the rollers 11 faces the guide wall 5b with a second opening 13 therebetween, and the reversed portions 4a of the three driven side flat cables 4 are individually positioned in the second openings 13. In this case, assuming that the width of the first opening 12 in the circumferential direction is represented by w1 and the width of the second opening 13 in the circumferential direction is represented by w2, w1 is set to a value that is sufficiently smaller than a value of w2 (w1=2 mm and w2=11 mm in this embodiment). Since the width w1 of one first opening 12 is set to a value that is smaller than the value of the width w2 of each of the other three second openings 13 as described above, only the reversed portion 3a of the driving side flat cable 3 pulls the roller 11 in a rotational direction when the rotor 2 is rotated in a clockwise direction, and only the reversed portion 3a of the driving side flat cable 3 pushes the guide wall 5b in a rotational direction when the rotor 2 is rotated in a counterclockwise direction.

The width w2 of the second opening 13 has been set to a value that is 5.5 times as large as the value of the width w1 of the first opening 12 in this embodiment, but may be appropriately set depending on the thickness of each of the driving and driven side flat cables 3 and 4, the number of revolutions of the steering wheel (rotor2), or the like. It is preferable for all practical purposes that the width of the second opening be set to a value 4.5 or more times as large as the value of the width of the first opening. Meanwhile, if the width w2 is set to a value less than 4.5 times as large as the value of the width w1, the reversed portion 3a of the driving side flat cable 3 passing through the first opening 12 pushes the guide wall 5b and drives the holder 5 when the rotor 2 is rotated in the counterclockwise direction. However, since a part of the reversed portions 4a of the driven side flat cables 4 are in contact with the rollers 11 facing the second openings 13 and the reversed portion 3a of the driving side flat cable 3 is moved in a direction opposite to a direction where the holder 5 is driven, the holder 5 is not smoothly rotated. Further, when the rotor 2 is rotated in the clockwise direction, the reversed portion 3a of the driving side flat cable 3 passing through the first opening 12 pulls the roller 11 and drives the holder 5. However, since a part of the reversed portions 4a of the driven side flat cables 4 are in contact with the guide walls 5b and the reversed portion 3a of the driving side flat cable 3 is moved in a direction opposite to a direction where the holder 5 is driven, the holder 5 is not smoothly rotated.

While the stator 1 is provided on the steering column and the rotor 2 is connected to the steering wheel, the rotary connector having the above-mentioned structure is assembled into the steering device of an automobile and used as electrical connection means of an airbag inflator or a horn circuit that is mounted in the steering wheel. If a driver rotates the steering wheel in a clockwise or counterclockwise direction when using the rotary connector, the torque is transmitted to the rotor 2 so that the rotor 2 is rotated in the clockwise or counterclockwise direction.

For example, if the rotor 2 is rotated from the neutral position of the steering wheel in the clockwise direction (a direction indicated by an arrow B of Fig. 2), the reversed portions 3a and 4a of all of the driving and driven side flat cables 3 and 4 are moved in the direction indicated by the arrow B by a distance smaller than the moving distance of the rotor 2. The holder 5 is also moved in the direction, which is indicated by the arrow B, so as to follow the reversed portions 3a and 4a. In this case, while being looped to the roller 11, the reversed portion 3a of the riving side flat cable 3, which passes through the narrow first opening 12, is wound on the outer peripheral wall of the inner cylindrical part 8b. However, since each of the reversed portions 4a of the three riving side flat cables 4, which passes through the wide second opening 13, is not bumped against the roller 11, the holder 5 receives a winding force from only the reversed portion 3a of the driving side flat cable 3 and is rotated in the annular space 10 in the direction indicated by the arrow B. As a result, the flat cables 3 and 4, which correspond to the length about two times as large as the moving distances of the reversed portions 3a and 4a, are fed from the inner peripheral wall of the outer cylindrical body 7 and tightly wound on the outer peripheral wall of the inner cylindrical part 8b.

In contrast, if the rotor 2 is rotated from the neutral position of the steering wheel in the counterclockwise direction (a direction indicated by an arrow A of Fig. 3), the reversed portions 3a and 4a of the flat cables 3 and 4 are moved in the direction indicated by the arrow A by a distance smaller than the moving distance of the rotor 2. The holder 5 is also moved in the direction, which is indicated by the arrow A, so as to follow the reversed portions 3a and 4a. In this case, the reversed portion 3a of the riving side flat cable 3, which passes through the narrow first opening 12, is bumped against the guide wall 5b. However, since each of the reversed portions 4a of the three riving side flat cables 4, which passes through the wide second opening 13, is not bumped against the guide wall 5b, the holder 5 receives a pushing force from only the reversed portion 3a of the driving side flat cable 3 and is rotated in the annular space 10 in the direction indicated by the arrow A. As a result, the flat cables 3 and 4, which correspond to the length about two times as large as the moving distances of the reversed portions 3a and 4a, are fed from the outer peripheral wall of the inner cylindrical part 8b and rewound toward the inner peripheral wall of the outer cylindrical body 7.

In the rotary connector according to this embodiment, one flat cable of four flat cables to be used, which passes through the first opening 12 set to be narrow, is the driving side flat cable 3 that is bumped against the guide wall 5b and applies a pushing force to the holder 5 in the rotational direction. However, the other three flat cables, which pass through the second openings 13 set to be wide, are the driven side flat cables 4 that are not bumped against the guide walls 5b. A flat cable having a thickness about two times as the thickness of the driven side flat cable 4, that is, a flat cable having bending strength (limit of elasticity) higher than the bending strength of the driven side flat cable 4 is used as the driving side flat cable 3. Accordingly, even though frictional resistance between the driving side flat cable 3 and the roller 11 is significantly increased and a loosely winding force, which pushes the reversed portion 3a in the first opening 12 toward the outer cylindrical body 7, exceeds a pushing force in a moving direction of the reversed portion 3a when the rotor 2 is rotated in the direction indicated by the arrow A and rewinds each of the flat cables 3 and 4 toward the inner peripheral wall of the outer cylindrical body 7, it is possible to smoothly rotate the holder 5 in the rotational direction by preventing the buckling of the driving side flat cable 3. In this case, the reversed portions 4a of the driven side flat cables 4 are reliably rewound on the inner peripheral wall of the outer cylindrical body 7 through the second openings 13 by the rotation of the holder 5. In addition, among the driving side flat cable 3 and one driven side flat cable 4 that are led from the first cable lead-out portion P1 of the inner cylindrical part 8b, the driving side flat cable 3 is wound on the lowest portion of the outer peripheral surface of the inner cylindrical part 8b and the driven side flat cables 4 are wound thereon. Accordingly, the curvature of the reversed portion 3a of the driving side flat cable 3 is increased as compared to the curvature of the reversed portion 4a of the driven side flat cable 4, so that it is possible to reduce the bending stress of the reversed portion 3a of the driving side flat cable 3 by that much. For this reason, it is possible to smoothly tightly wind / rewind the cables even though the four driving and driven side flat cables 3 and 4 are used in total. Further, it is possible to stably use the cable even under a high-temperature use environment and to lengthen the life of the driving side flat cable 3.

Meanwhile, one driving side flat cable and three driven side flat cables have been used in the above-mentioned embodiment. However, as long as the number of the driven side flat cables is two or more, the number of the driven side flat cables is not necessarily limited to three. The invention may be applied to a rotary connector that uses one driving side flat cable and two driven side flat cables.

Further, among four flat cables to be used, the driving side flat cable 3 and one driven side flat cable 4 have been led from the first cable lead-out portion P1 of the inner cylindrical part 8b, and the other two driven side flat cables 4 have been led from the second cable lead-out portion P2 of the inner cylindrical part 8b in the above-mentioned embodiment. However, all of the three or more flat cables to be used may be led from a common cable lead-out portion of the inner cylindrical part 8b. Even in this case, among the three or more flat cables led from the common cable lead-out portion, the driving side flat cable 3 may be wound on the lowest portion of the outer peripheral surface of the inner cylindrical part 8b, and the driven side flat cables 4 may be wound thereon.

## Claims

1. A rotary connector comprising:
a stator (1) that includes an outer cylindrical part;
a rotor (2) that includes an inner cylindrical part (8b) and is rotatably supported by the stator (1);
three or more flat cables (3, 4) that are received in an annular space (10) formed between the outer and inner cylindrical parts while being reversely wound on the way, both ends of the flat cables being connected to the stator (1) and the rotor (2), respectively; and
a holder (5) that is rotatably disposed in the annular space (10) and includes three or more openings (12, 13) through which reversed portions (3a, 4a) of the flat cables (3, 4) individually pass, whereby
the width of one opening in a circumferential direction is set to be smaller than that of each of the other openings in the circumferential direction,
the holder (5) is driven by a force from the flat cable that passes through the narrow opening,
the bending strength of the driving side flat cable. (3) is set to be higher than that of each of the other flat cables, and
at least two or more flat cables including the driving side flat cable (3) are led from a common cable lead-out portion of the inner cylindrical part (8b) toward the annular space (10),
**characterized in that**
the driving side flat cable (3) of the flat cables (3, 4) is wound on the lowest portion of the outer peripheral surface of the inner cylindrical part (8b) and the driven side flat cables (4) are wound thereon*.*

2. The rotary connector according to claim 1,
**characterized in that** another cable lead-out portion is provided at a position that is distant from the cable lead-out portion of the inner cylindrical part (8b) in the circumferential direction, and
at least two or more flat cables including the driving side flat cable (3) are led from the cable lead-out portion toward the annular space (10).

3. The rotary connector according to claim 1 or 2,
**characterized in that** each of the flat cables is formed of a band-shaped body where conductors are supported on an insulating film made of the same material, and
the thickness of the driving side flat cable. (3) is set to be larger than that of each of the other flat cables.

4. The rotary connector according to any of claims 1 to 3,
**characterized in that** the width of each of the other openings in the circumferential direction is set to be 4.5 times or more as large as the width of the narrow opening in the circumferential direction.

## Patentansprüche

1. Drehverbinder, aufweisend:
ein stationäres Element (1), das ein äußeres zylindrisches Teil aufweist;
ein Drehelement (2), das ein inneres zylindrisches Teil (8b) aufweist und von dem stationären Element (1) drehbar abgestützt ist;
drei oder mehr Flachkabel (3, 4), die in einem zwischen dem äußeren und
dem inneren zylindrischen Teil gebildeten, ringförmigen Raum (10) aufgenommen sind und unterwegs in umgekehrter Richtung gewickelt sind, wobei die beiden Enden der Flachkabel mit dem stationären Element (1) bzw. dem Drehelement (2) verbunden sind; und
einen Halter (5), der in dem ringförmigen Raum (10) drehbar angeordnet ist und drei oder mehr Öffnungen (12, 13) aufweist, durch die Umkehrbereiche (3a, 4a) der Flachkabel (3, 4) einzeln hindurchgeführt sind,
wobei die Breite von einer Öffnung in einer Umfangsrichtung kleiner vorgegeben ist als die Breite von den jeweiligen anderen Öffnungen in der Umfangsrichtung,
wobei der Halter (5) durch eine Kraft von dem Flachkabel antriebsmäßig bewegt wird, das durch die schmale Öffnung hindurchgeführt ist,
wobei die Biegefestigkeit des antriebsseitigen Flachkabels (3) höher vorgegeben ist als die Biegefestigkeit der jeweiligen anderen Flachkabel, und
wobei mindestens zwei oder mehr Flachkabel, die das antriebsseitige Flachkabel (3) einschließen, aus einem gemeinsamen Kabelaustrittsbereich des inneren zylindrischen Teils (8b) in Richtung auf den ringförmigen Raum (10) nach außen geführt sind,
**dadurch gekennzeichnet, dass** das antriebsseitige Flachkabel (3) der Flachkabel (3, 4) zuunterst auf die Außenumfangsfläche des inneren zylindrischen Teils (8b) gewickelt ist und die abtriebsseitigen Flachkabel (4) darauf gewickelt sind.

2. Drehverbinder nach Anspruch 1,
**dadurch gekennzeichnet, dass** ein weiterer Kabelaustrittsbereich an einer Stelle vorgesehen ist, die von dem Kabelaustrittsbereich des inneren zylindrischen Teils (8b) in Umfangsrichtung entfernt ist, und
dass mindestens zwei oder mehr Flachkabel, die das antriebsseitige Flachkabel (3) einschließen, von dem Kabelaustrittsbereich in Richtung auf den ringförmigen Raum (10) nach außen geführt sind.

3. Drehverbinder nach Anspruch 1 oder 2,
**dadurch gekennzeichnet, dass** jedes der Flachkabel aus einem bandförmigen Körper gebildet ist, bei dem Leiter auf einer aus dem gleichen Material gebildeten Isolierschicht abgestützt sind, und
dass die Dicke des antriebsseitigen Flachkabels (3) größer vorgegeben ist als die der jeweiligen anderen Flachkabel.

4. Drehverbinder nach einem der Ansprüche 1 bis 3,
**dadurch gekennzeichnet, dass** die Breite der jeweiligen anderen Öffnung in der Umfangsrichtung 4,5 mal so groß oder mehr als die Breite der schmalen Öffnung in der Umfangsrichtung vorgegeben ist.

## Revendications

1. Connecteur rotatif comprenant :
un stator (1) comprenant une partie cylindrique extérieure ;
un rotor (2) comprenant une partie cylindrique intérieure (8b) et supporté à rotation par le stator (1) ;
trois câbles plats ou plus (3, 4) logés dans un espace annulaire (10) formé entre les parties cylindriques extérieure et intérieure tout en étant enroulés de façon inverse, les deux extrémités des câbles plats étant connectées respectivement au stator (1) et au rotor (2) ; et
un support (5) qui est disposé à rotation dans l'espace annulaire (10) et comprend trois ouvertures ou plus (12, 13) dans lesquelles passent individuellement des parties recourbées (3a, 4a) des câbles plats (3, 4), dans lequel :
la largeur d'une ouverture dans une direction circonférentielle est plus petite que celle de chacune des autres ouvertures dans la direction circonférentielle,
le support (5) est entraîné par une force transmise par le câble plat qui passe dans l'ouverture étroite,
la force de flexion du câble plat côté entraînement (3) est supérieure à celle de chacun des autres câbles plats, et
au moins deux câbles plats ou plus incluant le câble plat côté entraînement (3) sont tirés d'une partie d'extraction de câble commune de la partie cylindrique intérieure (8b) vers l'espace annulaire (10),
**caractérisé en ce que** le câble plat côté entraînement (3) des câbles plats (3, 4) est enroulé sur la partie la plus basse de la surface périphérique extérieure de la partie cylindrique intérieure (8b) et le câble plat côté entraîné (4) est enroulé sur celui-ci.

2. Connecteur rotatif selon la revendication 1,
**caractérisé en ce qu'**une autre partie d'extraction de câble est prévue en une position qui est distante de la partie d'extraction de câble de la partie cylindrique intérieure (8b) dans la direction circonférentielle, et
au moins deux câbles plats ou plus incluant le câble plat côté entraînement (3) sont entraînés de la partie d'extraction de câble vers l'espace annulaire (10).

3. Connecteur rotatif selon la revendication 1 ou 2,
**caractérisé en ce que** chacun des câbles plats est formé d'un corps en forme de bande dans lequel des conducteurs sont supportés sur un film isolant fait du même matériau, et
l'épaisseur du câble plat côté entraînement (3) est supérieure à celle de chacun des autres câbles plats.

4. Connecteur rotatif selon l'une quelconque des revendications 1 à 3, **caractérisé en ce que** la largeur de chacune des autres ouvertures dans la direction circonférentielle est au moins 4,5 fois plus grande que la largeur de l'ouverture étroite dans la direction circonférentielle.
